# EUROPEAN PATENT APPLICATION

(11) **EP 1 241 239 A1**
(43) Date of publication of application: **18.09.2002**
(21) Application number: 01106755.0
(22) Date of filing: 17.03.2001
(51) Int. Cl.: C09J 7/02, C09J 153/02

(54) **UV-resistant hot melt pressure sensitive adhesives**

(71) Applicant: Henkel Kommanditgesellschaft auf Aktien, 40191 Düsseldorf (DE)
(72) Inventor: Hatfield, Steve, 40589 Düsseldorf (DE)

(57) **Abstract**

A blend of a SEPS (Styrene-Ethylene/Propylene-Styrene) thermoplastic elastomers (TPE), SIS (Styrene-Isoprene-Styrene) TPE's, fully hydrogenated plasticizers, hydrogenated tackifying resins, optionally an α-methyl-styrene (AMS) resin, hydrogenated hydrocarbon resins, antioxidants and stabilizers, and optionally a wax is suitable for use as a clear hotmelt pressure sensitive adhesive composition for the manufacture of a transparent pressure sensitive tapes with high resistance to UV-exposure. Preferred applications of these adhesives include UV-resistant, non staining removable pressure sensitive tapes or pressure sensitive a hook-and-loop type fasteners.

## Description

The invention relates to a clear hot melt pressure-sensitive adhesive (HPMSA) composition that has excellent UV stability and resistance to staining or adhesive transfer after removal. The HPMSA of this invention can be used in common pressure sensitive applications and provides maximum benefit in areas where the HPMSA is exposed to sunlight, UV light, or when applied in outdoor applications.

HPMSA's have been used to bond a variety of materials to many substrates. A pressure-sensitive adhesive is an adhesive that retains high surface tackiness over time. In other words, a HPMSA has a theoretically infinite open time. The bonding force of the HPMSA is derived from the ability of the adhesive to be compatible with the surface of both the substrate and the bonded materials. The adhesive bond arises from the compatibility of the adhesive mass with both the object and the substrate and the internal cohesiveness of the adhesive mass. Any change in the nature of the adhesive materials can have a large effect on bond strength and the cohesiveness of the adhesive. Any substantial degradation of the adhesive materials can cause loss of bond strength. Further, adhesive bond strength is reduced by contamination of the adhesive material or interference between surfaces at the interface between the adhesive bond and the adjacent surface.

The degradation of the adhesive mass and the resulting bond can be caused by electromagnetic radiation such as visible and ultraviolet light. The radiation degrades the polymer species in the adhesive, increases brittleness or substantially lowers molecular weight in such a way that these low molecular weight species can migrate to the substrate interface and can cause substantial staining of the interfacial substrate. Further, the contamination of the adhesive mass by plasticizer migrating from an adjacent surface of a plasticized object can cause substantial adhesive bond reduction.

Hot melt pressure sensitive adhesives typically comprise a block copolymer, a tackifying resin and a plasticizing oil. The block copolymer provides flexibility, integrity and smooth peel adhesion properties. It also further provides a medium for dissolution or suspension of the tackifying resin and the plasticizing oil. The tackifying resin enhances tack properties and adhesion and reduces viscosity and the plasticizing oil reduces peel values, viscosities, glass transition temperatures and storage modulus (G'), and increases flexibility. The low ultimate peel value and lower peel adhesion of the removable adhesive is achieved through the use of higher polymer and plasticizing oil concentrations and lower tackifying resin concentrations in the adhesive. The low levels of tackifier and high polymer and oil concentrations can lead to several problems.

There are many requirements that must be met in the development of removable grade hot melt pressure sensitive adhesives including low viscosities at application temperatures of less than about 175° C. , high heat resistance, good cold temperature flexibility, resistance to cold flow, good adhesion to the base substrate, high resistance to bleeding or staining of substrates, good die-cuttability and good quick tack or quick stick. The difficulty in formulating such adhesives is achieving a good balance of desirable properties without sacrificing one property for another. For instance, high heat resistance may be achieved at the expense of good cold temperature flexibility, lower viscosity may be achieved at the expense of stain resistance due to either higher levels of the liquid components or lower levels of polymer, good cold temperature flexibility may be achieved at the expense of resistance to what is known as "cold flow" at room temperature and adhesion and quick tack may be sacrificed to obtain lower, smoother peel characteristics to mention only a few examples.

Many hot melt pressure sensitive adhesive formulations are based on a wide variety of thermoplastic elastomers (TPE's) including SIS, SBS, SEBS and SEPS where the S represents a styrene block, I is a polyisoprene block, B is a polybutadiene block, EB is an ethylene/butylene block and lastly EP is a polyethylene/propylene block. Numerous compositions based on these elastomers have been suggested in the patent and general technical literature, however, for outdoor applications requiring resistance to sunlight, there is no prior art to be found which suggests the use of HMPSA's. For outdoor applications solvent based acrylate pressure sensitive adhesives have dominated the market, because of their outstanding resistance to UV light (sunlight). UV light in the wavelengths of 290 to 400 nanometers severely degrades unsatured polymers, tackifier resins and oils that make up traditional HMPSA's. Polymer such as SIS and SBS detackify quickly when exposed to UV light. Benzotriazole type UV absorbers such as Tinuvin 327 or 770 (Ciba Specialty Chemicals) have been shown to be not effective for long term outdoor exposure.

US-A-5204390 discloses a hot melt pressure-sensitive adhesive PSA composition comprising about 1-75 wt-% of a substantially saturated thermoplastic resin having a molecular weight of up to about 200,000; about 1-75 wt-% of a hydrocarbon resin; and about 10-50 wt-% of a plasticizer comprising an end-capped reaction product of a polybutene polymer having a molecular weight of up to about 5,000 and terminal ethylenic unsaturation, and a compound that can react with an ethylenically unsaturated group; wherein the plasticizer, thermoplastic resin and hydrocarbon resin cooperate to significantly stabilize the adhesive against UV radiation and the adhesive exhibits stable adhesive properties upon exposure to UV radiation and is resistant to migration of plasticizer, when adhered to a surface. This reference further suggests the addition of benzotriazole type UV absorbers to enhance the UV-stability of the adhesive composition. It is suggested to use these adhesives on non porous substrates like metal foils, cellulosics, fluorocarbon sheets, polyesters, metallized polyester, polyethylene, foamed polystyrene or polypropylene sheets.

US-A-6025071 refers to a removable grade hot melt pressure sensitive adhesive, comprising from about 10% to about 50% by weight of the adhesive of at least one styrene-isoprene-styrene block copolymer having a diblock content of greater than about 50%, a melt index of less than about 30 g/10 minutes; from about 10% to about 40% by weight of the adhesive of at least one tackifying resin having a softening point of less than about 120° C and from about 10% to about 50% by weight of the adhesive of a liquid plasticizer. The resultant adhesive has 180° peel values to stainless steel of less than about 4.0 pounds per linear inch. It is suggested to use such adhesives with low peel adhesion for making removable pressure sensitive labels such as magazine tipping, credit card attachment, removable store shelf marking for sale items, labels for electronics and appliances. This reference gives no indication about the UV-Stability, especially the long term UV-Stability of the adhesive compositions.

The unpublished patent application DE 10030683.7 discloses UV-resistant hotmelt pressure sensitive adhesives based on unsaturated Polymers and particulate inorganic compounds having a medium particle size d50 of 0,05 to 300 µm. In a preferred embodiment, the particulate inorganic compounds is titaniumdioxide, whereby the content of TiO₂ is at least 75 % by weight, based on the total inorganic compound. According to this disclosure, other suitable particulate inorganic compounds include for example SnO₂, PbO₂, SiO₂ (Stishovit), MnO₂, MgF₂, GeO₂, NbO₂, ZnO₂, CaCO₃, MgO, CaO or carbon black. Preferably the inorganic compounds have crystal structure of the rutile - type. These particulate inorganic compounds are said to improve the long term stability of the hotmelt pressure sensitive adhesive when the adhesive composition is exposed to UV-radiation. However, these compositions can not be formulated into clear, transparent or translucent adhesive compositions.

There is thus a need for hotmelt pressure sensitive adhesive compositions which are clear and transparent and which exhibit an excellent UV-stability when these adhesives are exposed to sunlight, UV-Light, especially when applied to outdoor applications.

The solution to the problem stated above is defined in claims and consists essentially in providing a clear hotmelt pressure sensitive adhesive composition for the manufacture of a transparent pressure sensitive adhesive which comprises :
a) at least one styrene-ethylene/propylene-styrene (SEPS) thermoplastic elastomer (TPE) and
b) at least one styrene-isoprene-styrene (SIS) thermoplastic elastomer,
c) at least one fully hydrogenated plasticizer,
d) at least one hydrogenated tackifying resin,
e) optionally an α-methyl-Styrene (AMS) resin,
f) at least one hydrogenated hydrocarbon resin,
g) antioxidants and stabilizers and
h) optionally a wax.

A further object of the present invention is are pressure sensitive adhesive tapes, fixation tapes for window insulation, protective tapes for mouldings or pressure sensitive adhesive hook- and- loop type fasteners (Velcro®) made by coating the tape substrate or the hook- and -loop type fastener with the transparent UV-resistant hotmelt pressure sensitive adhesive composition.

Saturated thermoplastic elastomers (TPE) such as styrene-ethylene-butylene-styrene (SEBS) block copolymers and styrene-ethylene-propylene-styrene (SEPS) block copolymers do not provide by themselves the necessary adhesive properties to make them useful as HMPSA's for outdoor applications such as fixation tapes for window insulation and protective tapes for mouldings. The nature of these outdoor applications requires adhesion to a wide variety of substrates, some quite porous, such as wood, painted wood, aluminum, and other metal window cases. Adhesives for these applications must not only have high adhesion ― greater than 40 N per inch (2,54 cm) ― but must be able to be removed cleanly from the substrates bonded to, even after long exposure to weathering and sun. Furthermore, due to the porous nature of the substrates in question, very heavy (thick) coatings of the HMPSA are required to obtain the necessary bonding of the wood, approximately 100 to 140 g/m² coating weight of adhesive is required for outdoor tapes of this type. Because of this very thick adhesive layer, high cohesive strength is required, normally the bond line having a coating weight of 100 g/m² of adhesive must withstand a static load of 1 kg per square inch (6,45 cm²) for more than 60 hours. HMPSA's based on unsaturated TPE's such as styrene-isoprene-styrene block copolymers (SIS) or styrene-butadiene-styrene block copolymers (SBS) have been shown to have the initial properties to meet the requirements for outdoor use, but they fail quickly upon exposure to UV light from the sun. Even the addition of UV-absorbers and/or antioxidants in high quantities do not provide sufficient outdoor ageing resistance to pressure sensitive adhesives based on unsaturated thermoplastic elastomers. Surprisingly, saturated thermoplastic elastomers such as SEBS and SEPS can be blended with unsaturated thermoplastic elastomers such as SIS and SBS to provide the base for clear and UV-resistant hotmelt pressure sensitive adhesive compositions.

SEBS copolymers are commercially available, they are selectively hydrogenated block copolymers of styrene and butadiene such as KRATON G1650 polymer (KRATON is a trademark) which is a selectively hydrogenated styrene-butadiene-styrene block copolymer. With the term "selective hydrogenation" is meant that primarily the butadiene block is hydrogenated. Butadiene that has been polymerised by 1,4-addition yields "ethylene" units upon hydrogenation and butadiene that has been polymerised by 1,2-addition yields "butylene" units. Therefore, selectively hydrogenated styrene- butadiene-styrene block copolymers are commonly referred to as styrene-ethylene/butylene-styrene (SEBS) block copolymers. The amount of butadiene that has been polymerised by 1,2-addition, relative to the total amount of polymerised butadiene, is commonly referred to as "% vinyl content before hydrogenation" or "the butylene content". The SEBS block copolymers that have been used in this application generally have a vinyl content before hydrogenation of 18 to 50% by weight. KRATON G1650 has a vinyl content before hydrogenation of about 35% by weight. KRATON G-1726 polymer is an SEBS polymer having a weight average molecular weight of 73000, a polystyrene block weight average molecular weight of 7100, a polystyrene content of 31 percent, and which has a coupling efficiency of percent (this means that only 30 percent of the total polymer is triblock and the rest is diblock). Other examples of SEBS block copolymers include KRATON G1651, G 1652, G1654, KRATON FG 1901X, 1921X and 1924X. Similar SEBS copolymers are available from KURARAY as Septon S8004, S8006, S8007.

In a similar way, styrene-isoprene-styrene copolymers can be selectively hydrogenated to form SEPS block copolymers. Similarly, the term "selective hydrogenation" means that a primarily the isoprene block is hydrogenated. In case of isoprene copolymers, the "% vinyl content before hydrogenation" is the total amount of isoprene that has been polymerised by either 1,2-addition or 3,4-addition, relative to the total amount of polymerised isoprene. Examples for SEPS are Septon 4033 made by KURARAY which has a weight average molecular weight of 96000, a polystyrene block weight average weight of 8100 and has a polystyrene content of 28% by weight. Other examples for SEPS block copolymers from KURARAY are S2005, S2006, S2007, S2043, S2063, S2104. Similar SEPS block copolymers are available from Shell under the Tradename KRATON RP6906 or G1730.

The second essential polymer component in the adhesive composition is selected from styrene isoprene (SIS) block copolymers. Suitable SIS block copolymers are well known in the art, the styrene block typically has a molecular weight range from about 1000 to 25000 preferably from 5000 to about 50000. The isoprene block has typically a molecular weight of about 40000 to 300000 preferably between 80000 and 250000 and most preferably between about 100000 and 200000. Examples of SIS copolymers include KRATON D1107, D1111, D1112, D1113X, D1114X and similar SIS block copolymers from other suppliers such as Vector 4411D from Dexco or SolT190, SolT193A, SolT193B and SolTE-9308 from Enichem.

Fully hydrogenated plasticizers can be selected from paraffinic hydrocarbon oils ― available for example under the tradename Primol from Exxon ―, polyisobutylenes, poly-1-butene oils or hydrogenated naphthenic oils. Preferably, the polyisobutylenes have a molecular weight to range from about 600 to 5000, more preferably from 800 to 4000. Typically they are high viscous liquids at room temperature. Suitable polyisobutylenes are available under the tradename "Parapol" from EXXON Chemicals or under the tradename "Oppanol" from BASF.

The tackifying resins useful to the present invention can be selected from a wide range of commercially available resins. These include aliphatic, cycloaliphatic and aromatic hydrocarbon resins, modified hydrocarbons and, terpenes, modified terpenes, rosins, modified rosins. The softening point of these resins is preferably less than about 120° C., more preferably less than about 110° C. and even more preferably between 80 °C and 110 °C. These tackifying resins are generally commercially available with differing levels of hydrogenation. Useful resins include Eastotac® H-115 W and more preferably Eastotac® H-100 W, partially hydrogenated cycloaliphatic petroleum hydrocarbon resins with softening points of 115° C. and 100° C., respectively. These resins are available in the E grade, R grade, L grade and W grade indicating increasing levels of hydrogenation and therefore lighter colour respectively. They are available from Eastman Chemical Co. in Kingsport, Tenn. Other available resins include Escorez® 5300 and Escorez® 5400, partially hydrogenated cycloaliphatic petroleum hydrocarbon resins, and Escorez® 5600, a partially hydrogenated aromatic modified petroleum hydrocarbon resin all having softening points of about 100° C. and available from Exxon Chemical Company in Houston, Texas; Wingtack® Extra which is an aliphatic, aromatic petroleum hydrocarbon resin, Wingtack® 86, an aromatic modified synthetic polyterpene hydrocarbon resin and Wingtack 95, a synthetic polyterpene all having softening points of less than about 100° C. and available from Goodyear Tire and Rubber Co. in Akron, Ohio and Arkon® P-70, P-90 and P-100, synthetic petroleum hydrocarbon resins having softening points of 70° C., 90° C. and 100° C. consecutively and available from Arakawa Chemical (USA) Inc. in Chicago, Illinois. Further examples include Hercolite® 2100 which is a partially hydrogenated cycloaliphatic petroleum hydrocarbon resin available from Hercules, Inc. in Wilmington, Del. And Zonatac® 105 Lite which is a styrenated terpene hydrocarbon resin, made from d-limonene and available from Arizona Chemical in Panama City, Florida. Useful modified rosins include Sylvatac® 1103 and Zonester® 100 available from Arizona Chemical and Permalyn 305 or Foral 85E®, Foral AX® or Foral 105E® available from Hercules which are all pentaerythritol or glycerol rosin esters. All of these resins also have softening points of less than about 100° C. Sylvatac® 1085, an 85° C. softening point glycerol rosin ester of tall oil is another example of a useful rosin based tackifier. It should be noted that there are numerous types of rosins and modified rosins with differing levels of hydrogenation including gum rosins, wood rosins, tall-oil rosins, distilled rosins, dimerized rosins and polymerized rosins. Some specific modified rosins include glycerol and pentaerythritol esters of wood rosins and tall-oil rosins. For obtaining a colourless, clear, transparent und UV-resistant adhesive composition, the tackifying resins should be at least partially hydrogenated, i.e. 80 to more than 90% of the unsaturation should hydrogenated, the fully hydrogenated versions of the aforementioned tackifying resins are the most preferred.

The adhesive compositions of the present invention may contain in optionally α-methyl-styrene polymers also referred to as "AMS resins". These are low molecular weight, clear, solid polymers or copolymers of α-methyl-styrene. The suitable AMS resins have a ring and ball softening point (RBSP according to ASTM E28) from about 70°C to 140 °C. Typical examples are sold by Hercules under the tradenames Kristalex 3085, Kristalex F100, Kristalex F85, Kristalex 3070, Kristalex 1120, Kristalex F120, similar resins are available from other suppliers like Arizona Chemicals or Amoco.

Stabilizers to be utilized in the present invention, are high molecular weight hindered phenols and multifunctional phenols. Hindered phenols are well known to those skilled in the art to be effective primary stabilizers for styrene-isoprene block copolymers. Typical commercially available stabilizers of these types are supplied by Ciba-Geigy under the tradenames Irganox 1010 and Irganox 1076. Useful secondary stabilizers include phosphites, such as tris-(p-nonylphenyl)-phosphite (TNPP) and bis(2,4-di-tert-butylphenyl)4,4'-diphenylene-diphosphonite and distearyl-3,3'-thiodipropionate (DSTDP). Stabilizer(s) can represent from 0,1 to about 2,5, preferably from about 0.25 to about 1,5 % by weight of the hot melt adhesive of this invention.

Waxes in the composition of the present invention ranging from 0% to 10% by weight may be used to reduce the surface tack of the adhesives without appreciably decreasing their adhesive bonding characteristics. These waxes also are used to reduce the blocking of the composition without effecting the temperature performance. Among the useful waxes are low molecular weight, that is, 1000-6000, polyethylene having a hardness value, as determined by ASTM method D- 1321 of from about 0,1 to 120 and ASTM softening points of from about 65°C to 120°C. Also, petroleum waxes may be used such as paraffin wax having a melting point of from about 55°C to 75°C and microcrystalline wax having a melting point of from about 55°C to 95°C, the latter melting points being determined by ASTM method D 127-60. Atactic polypropylenes are also suitable they have a ring and ball softening point of from about 120 °C to 160 °C. An other group of waxes are synthetic waxes made by polymerizing carbon monoxide and hydrogen such as Fischer-Tropsch wax; and polyolefin waxes. As used herein, the term "polyolefin wax" refers to those polymeric or long-chain entities comprised of olefinic monomer units. These materials are commercially available from Eastman Chemical Co. under the trade name "Epolene." The materials which are preferred to use in the compositions of the present invention have a Ring and Ball softening point of 95°C to 175°C. As should be understood, each of these wax diluents is solid at room temperature. Other useful substances include hydrogenated animal, fish and vegetable fats and oils such as hydrogenated tallow, lard, soya oil, cottonseed oil, castor oil, menhadin oil, cod liver oil, etc., and which are solid at ambient temperature by virtue of their being hydrogenated, have also been found to be useful with respect to functioning as a wax diluent equivalent. These hydrogenated materials are often referred to in the adhesives industry as "animal or vegetable waxes."

Preferably, the hotmelt pressure sensitive adhesive compositions of the present invention comprise:
a) 5 to 25%, most preferred 10 to 20% by weight of SEPS and
b) 5 to 25%, most preferred 10 to 20% by weight of SIS and,
c) 5 to 20%, most preferred 7 to 15 % by weight of a fully hydrogenated plasticizer and
d) 5 to 15% by weight of a hydrogenated tackifying resin with a ring and ball softening point according to ASTM E 28 from 80°C to 110°C,
e) 0 to 10% of an α-methyl-styrene resin with a ring and ball softening point according to ASTM E 28 from 70°C to 140°C,
f) 30 to 50% of a hydrogenated hydrocarbon resin with a ring and ball softening point according to ASTM E 28 from 80°C to 120°C,
g) 0.25 to 1.5% of antioxidants and stabilizers, and
h) 0 to 5% of a wax.

It is to be understood, that the sum of components a) to h) will be 100 % by weight.

The hot melt adhesive composition of this invention is prepared by mixing the components in a heated tank under vacuum at a temperature of from about 120° C. to about 190° C. until a homogeneous blend is obtained. A minimal amount of thermal and mechanical energy should be employed to manufacture the adhesive. The determination of such amounts are well within the purview of one skilled in the art. This step usually requires two to three hours. The vacuum is then broken with nitrogen or carbon dioxide gas to prevent air entrapment in the adhesive. The finished adhesive is then packed and cooled quickly for shipment to the manufacturer of the pressure sensitive tapes Velcro fasteners or similar articles.

Said manufacturer then re-melts the hot melt adhesive for use as the pressure sensitive adhesives of said articles. The application of the hot melt construction adhesives may be accomplished by several applications systems depending on the type of article being made and the substrates involved. These application systems may involve spiral spray techniques, multi-line extrusion, multi-dot extrusion, and melt blown deposition. The adhesives produced by the teachings of the present invention can be applied by any of the aforementioned techniques in the manufacture of consumer articles, and wherein the adhesive is bonding a polyolefin or nonwoven substrate to at least one elastic, polyolefin, foam, or nonwoven substrate.

The UV properties of the HMPSA of the present invention clearly surpass those of current state of the art HMPSA's with the following key features:
- Viscosity of 30.000 (15.000 to 45.000) mPa·s at 150°C.
- Peel adhesion (Pressure Sensitive Tape Council, PSTC no. 1) of a minimum of 40 N/2,54 cm when applied at a coating weight of 100 g/m² with adhesive failure.
- No transfer of adhesive to the substrate even after long term exposure to UV light.
- A minimum loop tack of 25 N per 2.5 cm initially at same coating weight as above, without more than a 50% loss, preferably a 75% retention in this value after exposure to UV light.
- A minimum time to failure of 60 hours for the standard PSTC no. 7 static shear test, with no adhesive transfer.
- Excellent adhesion to wood molding, aluminum window frames, and SS panels with clean removal (no transfer) after long term exposure to sunlight (UV light).

This invention can be further illustrated by the following examples of the preferred embodiments thereof, although it will be understood that these examples are included only for illustration and comparison to the existing art, and are not intended to limit the scope of the invention unless specifically indicated. All the amounts of the compositions are parts, by weight, unless indicated otherwise.

### Examples

### Examples 1 - 12 (including comparative examples)

Hotmelt adhesive compositions in accordance with the state of the art (comparative examples 1 to 5 and 10 and 11) and according to the teachings the present invention (examples 6 - 9) where prepared by blending SEBS-, SEPS-, SIS-, block copolymers, plasticizers and stabilizers in a heated vessel at 175 °C under high shear from a marine type mixer. Once this blend was homogenous, the tackyfing resin was added slowly until a uniform clear mixture was obtained. The resulting adhesive was tested for viscosity, softening point (RBSP) and then coated on a 50µm film using a state of art slot-die coater at 140 °C. The resulting pressure sensitive films of adhesive tapes where then tested with respect to peel adhesion, performance under UV-exposure, loop tack (according to PSTC) and static shear (according to PSTC 7). The results are summarized in the attached tables.

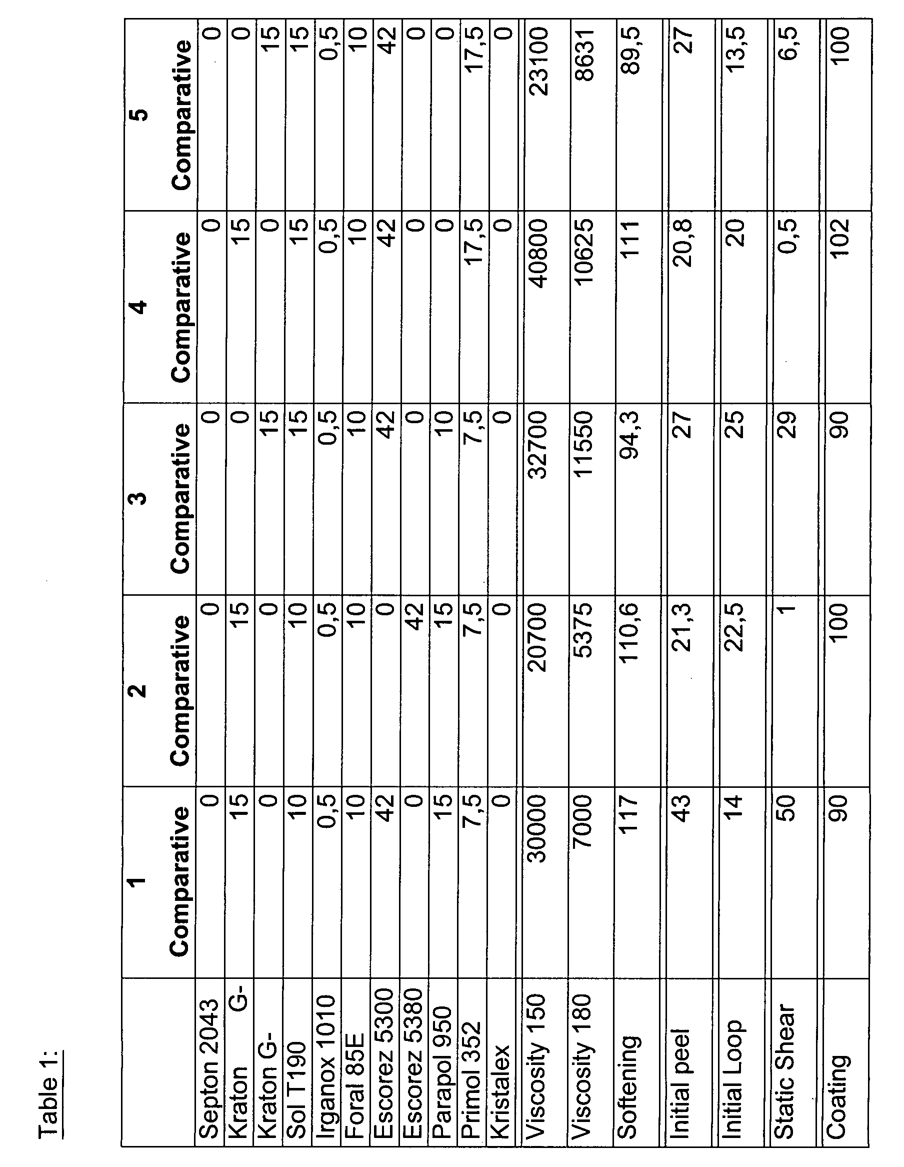

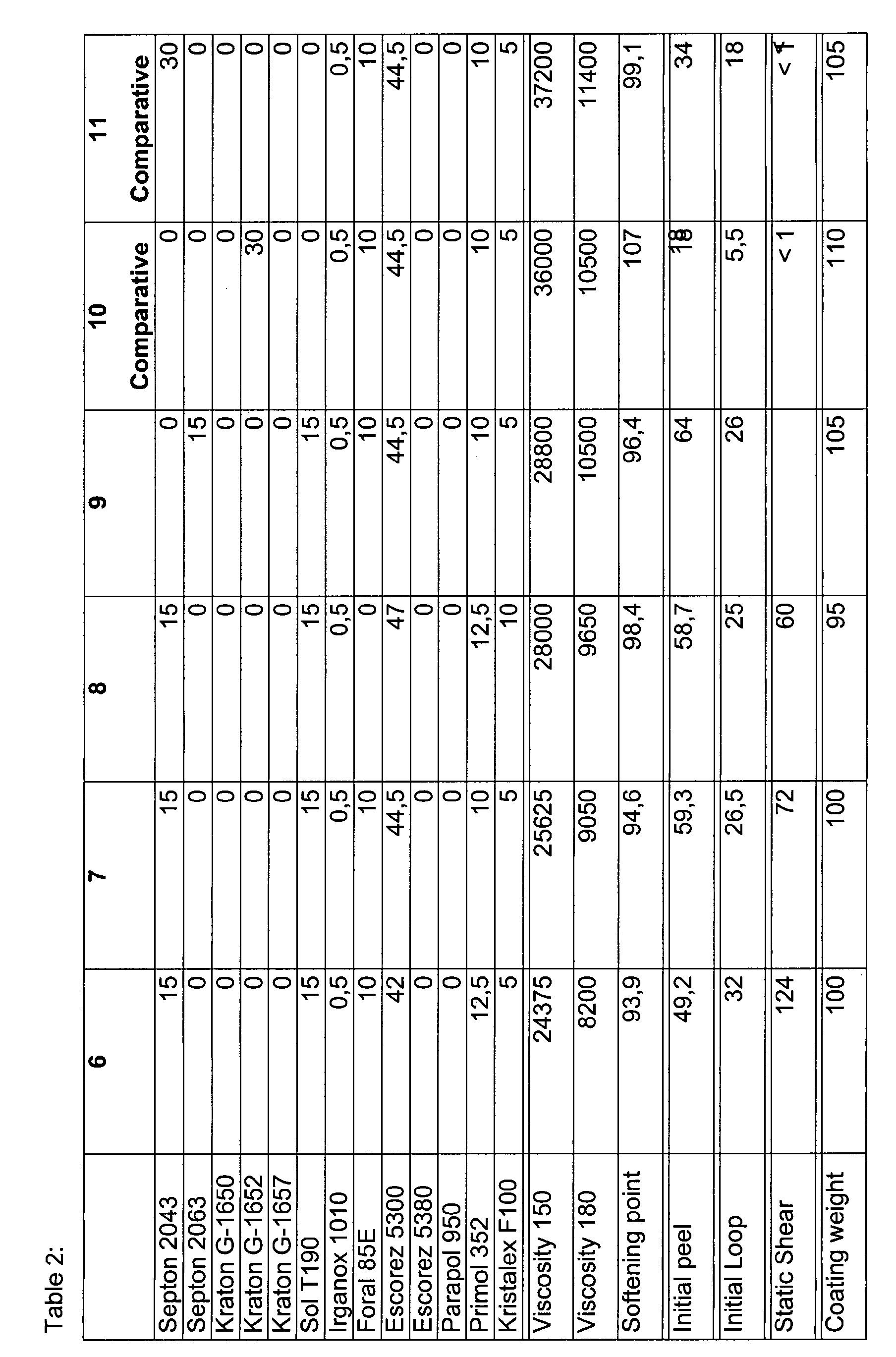

From the comparative examples above it can be clearly seen, that compositions, containing blends of SIS and SEBS do not have the necessary adhesion properties (initial peel adhesion, initial loop tack and static shear strength), to meet even initial end use requirements.

### UV- resistance (comparative example 12 and example 8)

A standard HMPSA was made from 30 parts SIS (SolT190), 53 parts tackifier (WingTack 95), 15 parts mineral oil (Shell oil 4178) and 0,5 parts stabilizer (Irganox 1010), 1,5 parts UV-absorber (Tinuvin 770DF) and compared to the adhesive of inventive example 8. The adhesives were tested for their initial adhesive properties and for their properties after 1000 hrs. UV exposure (300W Osram Vitalux Lamp).

**Table 3**

| Example | 12 | 8 |
|---|---|---|
| Viscosity 150°C | 35000mPas | 28800mPas |
| Viscosity 180°C | 8000mPas | 10500mPas |
| RBSP | 102°C | 96,4°C |
| coating weight g/m² | 98 | 105 |
| PSTC-1, initial | 100N | 64N |
| PSTC-7, initial | 7 Days | 3 days |
| LoopTack, initial | 39N | 26N |
| PSTC-1, 1000 hrs UV | 0 | 49N |
| PSTC-7, 1000 hrs UV | 0 | 20N |
| LoopTack, 1000 hrs UV | 0 | 3 days |

Although the initial adhesive values of comparative adhesive 12 are good, the results show clearly, that these adhesive fail totally after UV exposure, whereas the adhesives according to the present invention retain there adhesive power even after long UV exposure.

## Claims

1. A clear Hot Melt Pressure Sensitive Adhesive composition for the manufacture of a transparent pressure sensitive tape comprising:
a) at least one SEPS (Styrene-Ethylene/Propylene-Styrene) thermoplastic elastomer (TPE) and
b) at least one SIS (Styrene-lsoprene-Styrene) TPE,
c) at least one fully hydrogenated plasticizer,
d) at least one hydrogenated tackifying resin,
e) optionally an α-Methyl-Styrene (AMS) resin,
f) at least one hydrogenated hydrocarbon resin,
g) antioxidants and stabilizers, and
h) optionally a wax.

2. A Hot Melt Pressure Sensitive Adhesive composition according to claim 1 comprising
i) 10 to 20% by weight of SEPS and
j) 10 to 20% by weight of SIS and,
k) 5 to 20% by weight of a fully hydrogenated plasticizer and
I) 5 to 15% by weight of a hydrogenated tackifying resin with a ring and ball softening point according to ASTM E 28 from 80°C to 110°C,
m) 0 to 10% of an α-Methyl-Styrene resin with a ring and ball softening point according to ASTM E 28 from 70°C to 140°C,
n) 30 to 50% of a hydrogenated hydrocarbon resin with a ring and ball softening point according to ASTM E 28 from 80°C to 120°C,
o) 0.25 to 1.5% of antioxidants and stabilizers, and
p) 0 to 5% of a wax.

3. A Hot Melt Pressure Sensitive Adhesive composition according to any of the preceeding claims whereby the plasticizer c) is selected from paraffinic hydrocarbon oils, PIB (Poly-isobutylene) or Poly-1-butene oils.

4. A Hot Melt Pressure Sensitive Adhesive composition according to any of the preceeding claims whereby the hydrogenated tackifying resin d) is selected from hydrogenated gycerol or pentaerthrytol esters of wood rosin, tall oil rosin or gum rosin.

5. A Hot Melt Pressure Sensitive Adhesive composition according to any of the preceeding claims whereby the resin e) is selected from the group of hydrogenated C₅ toC₉ hydrocarbon resins, coumarone or coumarone indene resins or petroleum resins.

6. A pressure sensitive adhesive tape made by coating the tape substrate with a hot melt composition according to to any of the proceeding claims.

7. A pressure sensitive adhesive tape according to claim 6, **characterised in that** the tape substrate is transparent or translucent.

8. A pressure sensitive adhesive tape according to claim 6 or 7, **characterised in that** the tape substrate is a hook-and-loop type fastener.

9. The use of a pressure sensitive tape according to claims 6 to 8 as UV-resistant, non staining removable tapes.
